# EUROPÄISCHE PATENTSCHRIFT

(11) **EP 2 528 682 B1**
(45) Veröffentlichungstag und Bekanntmachung des Hinweises auf die Patenterteilung: **04.07.2018**
(21) Anmeldenummer: 11702431.5
(22) Anmeldetag: 28.01.2011
(51) Int. Cl.: B01J 21/02, C01F 7/06, C01F 7/16, C01G 49/02

(54) **VERFAHREN ZUM HERSTELLEN EINES KATALYSATORS ZUM CRACKEN VON ORGANISCHEN KOHLENSTOFFVERBINDUNGEN**
METHOD FOR PRODUCING A CATALYST FOR CRACKING ORGANIC CARBON COMPOUNDS
PROCÉDÉ DE PRODUCTION D'UN CATALYSEUR DESTINÉ AU CRAQUAGE DE COMPOSÉS CARBONÉS ORGANIQUES

(30) Priorität: 29.01.2010 EP 10152135
(43) Veröffentlichungstag der Anmeldung: 05.12.2012
(73) Patentinhaber: Krause-Röhm-Systeme AG, 81541 München (DE)
(72) Erfinder: KRAUSE, Eberhard, 16540 Hohen Neuendorf (DE)
(74) Vertreter: Hofstetter, Schurack & Partner
(86) Internationale Anmeldenummer: PCT/EP2011/051223
(87) Internationale Veröffentlichungsnummer: WO 2011/092292

(56) Entgegenhaltungen:
- US-A- 2 992 893
- US-A- 3 776 717
- WHITTINGTON B I: "The chemistry of CaO and Ca(OH)2 relating to the Bayer process", HYDROMETALLURGY, ELSEVIER SCIENTIFIC PUBLISHING CY. AMSTERDAM, NL LNKD- DOI:10.1016/0304-386X(96)00009-6, Bd. 43, Nr. 1, 1. November 1996 (1996-11-01), Seiten 13-35, XP004040807, ISSN: 0304-386X
- YANIK J ET AL: "Biomass gasification in supercritical water: II. Effect of catalyst", INTERNATIONAL JOURNAL OF HYDROGEN ENERGY, ELSEVIER SCIENCE PUBLISHERS B.V., BARKING, GB LNKD- DOI:10.1016/J.IJHYDENE.2008.06.024, Bd. 33, Nr. 17, 1. September 2008 (2008-09-01), Seiten 4520-4526, XP025771112, ISSN: 0360-3199 [gefunden am 2008-08-16]
- SUSHIL S ET AL: "Catalytic applications of red mud, an aluminium industry waste: A review", APPLIED CATALYSIS B: ENVIRONMENTAL, ELSEVIER LNKD- DOI:10.1016/J.APCATB.2007.12.002, Bd. 81, Nr. 1-2, 30. Mai 2008 (2008-05-30) , Seiten 64-77, XP022649205, ISSN: 0926-3373 [gefunden am 2007-12-15]
- KLOPRIES B ET AL: "Catalytic hydroliquefaction of biomass with red mud and CoO@?MoO3 catalysts", FUEL, IPC SCIENCE AND TECHNOLOGY PRESS, GUILDFORD, GB LNKD- DOI:10.1016/0016-2361(90)90312-E, Bd. 69, Nr. 4, 1. April 1990 (1990-04-01), Seiten 448-455, XP025457194, ISSN: 0016-2361 [gefunden am 1990-04-01]

## Beschreibung

Die Erfindung betrifft ein Verfahren zum Herstellen eines Katalysators zum Cracken von organischen Kohlenstoffverbindungen, einen Katalysator zum Cracken von organischen Kohlenstoffverbindungen sowie ein Verfahren zum Cracken wenigstens einer organischen Kohlenstoffverbindung mittels eines derartigen Katalysators.

In der Erdöl-Verarbeitung werden Kohlenwasserstoffe längerer Kettenlänge mit Hilfe von Katalysatoren in Kohlenwasserstoffe kürzerer Kettenlänge gespalten. Dies ist notwendig, da mehr kurzkettige Kohlenwasserstoffe benötigt werden, als im Erdöl enthalten sind. Gleiches gilt für das Cracken von längerkettigen Kohlenwasserstoffen, wie sie beispielsweise in Biomasse vorkommen. Die Zusammensetzung von Erdöl kann je nach Herkunft sehr unterschiedlich sein und umfasst verschiedenste substituierte und unsubstituierte Kohlenwasserstoffe wie beispielsweise Alkane, Cycloalkane, Aromaten, Napthensäuren, Phenole, Harze, Aldehyde und organische Schwefelverbindungen. Demgegenüber umfasst Biomasse im Wesentlichen komplexe Kohlenhydrate wie Cellulose, Stärke, Lignin, Lignocellulose oder Hemicellulose sowie Fette und Proteine. Katalytische Crackverfahren bieten dabei gegenüber den thermischen Verfahren verschiedene Vorteile, da sie üblicherweise geringere Temperaturen oder niedrigere Drücke benötigen und mit höheren Reaktionsgeschwindigkeit ablaufen.

Von hohem Interesse für die chemische Industrie sind auch kurzkettige, ungesättigte Kohlenwasserstoffe wie Ethen und Propen, da diese zur Herstellung von Kunststoffen benötigt werden. Diese kurzkettigen Alkene sind dabei nicht nur aus Leicht- und Schweröl, sondern auch aus korrespondierenden Alkanen wie Ethan, Propan oder Butan erhältlich.

Aus der DE 10 2007 058 394 A1 ist ein Verfahren zur Herstellung von Kraftstoffen aus Biomassen zu entnehmen. Als heterogene Katalysatoren sind verschiedene Zeolithe und Metalle aus der Gruppe Ni, Pd, Pt, Co, Rh, Ir, Fe, Ru, Os, Cu, Zn, Mo und W vorgesehen.

Als nachteilig an den bekannten Katalysatoren ist der Umstand anzusehen, dass diese vergleichsweise teuer sind und besonders bei niedrigen Temperaturen bis etwa 450°C durch Teerbildung schnell vergiftet und deaktiviert werden.

Aus der Im US 2922893 A ist ein Verfahren bekannt, bei welchem Rotschlamm mit einem Erdalkalisalz vermischt, bei Atmosphärendruck auf eine Temperatur zwischen 50°C und 100°C oder im Autoklaven auf eine Temperatur zwischen 100°C und 240°C erwärmt und anschließend in eine feste und eine flüssige Phase getrennt wird, um gebundene Alkalimetallsalze, insbesondere NaOH, freizusetzen.

Aus der US 3 776 717 A ist ein Verfahren zu entnehmen, bei welchem Rotschlamm in der Gegenwart von Huminsäure oder Huminsäurederivaten mit Kalk versetzt und auf Temperaturen zwischen 80 °C und 100 °C erwärmt wird.

Aus der Publikation WHITTINGTON B I: "The chemistry of CaO and Ca(OH)2 relating to the Bayer process" (HYDROMETALLURGY, ELSEVIER SCIENTIFIC PUBLISHING CY. AMSTERDAM, Bd. 43, Nr. 1, 1. November 1996, Seiten 13-35) sind verschiedene Verfahren bekannt, bei welchen Rotschlamm mit Kalk vermischt und erwärmt wird. Zur Steigerung der Effizienz des zugegebenen Kalks werden möglichst hohe Temperaturen und möglichst lange Reaktionszeiten empfohlen.

Die Publikation YANIK J ET AL: "Biomass gasification in supercritical water: II. Effect of catalyst" (INTERNATIONAL JOURNAL OF HYDROGEN ENERGY, ELSEVIER SCIENCE PUBLISHERS B.V., BARKING, Bd. 33, Nr. 17, 1. September 2008, Seiten 4520-4526) befasst sich mit der Umsetzung von Biomasse mit unbehandeltem Rotschlamm.

Die Publikation SUSHIL S ET AL: "Catalytic applications of red mud, an aluminium industry waste: A review" (APPLIED CATALYSIS B: ENVIRONMENTAL, Bd. 81, Nr. 1-2, 30. Mai 2008, Seiten 64-77) offenbart Verwendungen von Rotschlamm als Katalysator in unterschiedlichen Reaktionstypen.

Die Publikation KLOPRIES B ET AL: "Catalytic hydroliquefaction of biomass with red mud and CoO-MoO3 catalysts" (FUEL, IPC SCIENCE AND TECHNOLOGY PRESS, GUILDFORD, Bd. 69, Nr. 4, 1. April 1990, Seiten 448-455) befasst sich mit der Verflüssigung von Biomasse mit Hilfe von Rotschlamm oder CoO-MoO3 Katalysatoren.

Es besteht daher ein Bedarf an Katalysatoren, die sich auch als kostengünstige Einweg- bzw. Wegwerfkatalysatoren für sogenannte "single-pass catalytic conversions" eignen und mit welchen organische Kohlenstoffverbindungen kostengünstiger gecrackt werden können.

Die Aufgabe wird erfindungsgemäß durch ein Verfahren gemäß Patentanspruch 1 zum Herstellen eines Katalysators zum Cracken von organischen Kohlenstoffverbindungen sowie durch ein Verfahren gemäß Patentanspruch 7 zum Cracken wenigstens einer organischen Kohlenstoffverbindung mittels eines derartigen Katalysators gelöst.

Bei einem erfindungsgemäßen Verfahren zum Herstellen eines Katalysators zum Cracken von organischen Kohlenstoffverbindungen werden zumindest die Schritte a) Herstellen einer wässrigen Suspension, welche Rotschlamm und zumindest ein Calcium-Salz umfasst, wobei ein pH-Wert der Suspension auf mindestens 10, ein Gewichtsverhältnis zwischen dem Rotschlamm und Wasser auf einen Wert zwischen 0,8 und 1,2, ein Gewichtsverhältnis zwischen dem Calcium-Salz und dem Rotschlamm auf einen Wert von mindestens 0,15, ein Molverhältnis zwischen Calcium und Aluminium auf einen Wert zwischen 1,6 und 2,0 eingestellt wird, b) Erwärmen der Suspension zwischen 10 Minuten und 6 Stunden auf eine Temperatur zwischen 40°C und 49°C und c) Abtrennen wenigstens eines überwiegenden Teils einer wässrigen Phase von einem festen, in Schritt b) erzeugten Produktgemisch, wobei das feste Produktgemisch den Katalysator umfasst, durchgeführt. Auf diese Weise wird ein Katalysator erhalten, der sich als kostengünstiger Wegwerfkatalysator auch für sogenannte "single-pass catalytic conversions" eignet und mit welchem organische Kohlenstoffverbindungen kostengünstiger gecrackt werden können.

Bei der Aluminium-Produktion gemäß dem Bayer-Verfahren wird mit Hilfe von Natronlauge Al₂O₃ aus fein gemahlenem Bauxit herausgelöst. Aus der dabei erhaltenen Natriumaluminat-Lösung wird nach Animpfen mit Kristallisationskeimen reines Al(OH)₃ (Gibbsit) gefällt, aus welchem schließlich durch Elektrolyse metallisches Aluminium gewonnen wird. Zurück bleibt ein Gemisch, das sich chemisch betrachtet hauptsächlich aus Eisenoxiden bzw. -hydroxiden, Titanoxiden, Aluminiumoxidresten, Quarzsand, Kalziumoxid, Natriumoxid und Restnatronlauge zusammensetzt. Wegen seiner durch Eisen(III)-oxid hervorgerufenen roten Farbe wird dieser Rückstand als Rotschlamm (oder "red mud") bezeichnet.

Zu jeder produzierten Tonne Aluminium fallen je nach Qualität des verwendeten Bauxits 1 bis 1,5 Tonnen Rotschlamm als nicht vermeidbarer Begleiter an. Jedes Jahr entstehen daher mehrere Millionen Tonnen an Rotschlamm, die zusammen mit den bereits vorhandenen Rotschlamm-Abfällen ein ernsthaftes Umwelt- und Entsorgungsproblem darstellen. Das Hauptproblem ist die aufgrund seines Natronlaugengehalts hohe Alkalität des Rotschlamms, der üblicherweise pH-Werte zwischen 11 und 14 aufweist. Darüber hinaus stellen toxisch wirkende Aluminium-Ionen zusammen mit Eisen-Verbindungen eine große Gefahr für das Grundwasser dar und erschweren eine umweltgerechte Lagerung zusätzlich.

Die Entsorgung des Rotschlamms erfolgt daher im Wesentlichen durch Einlagerung in abgedichteten Deponien. Die am Boden der Deponie austretende Natronlauge wird gesammelt und in den Bayer-Prozess rückgeführt. Diese Form der Lagerung ist jedoch teuer und aufwändig, da große Deponieflächen und -anlagen benötigt werden und hohe Kosten für den Transport des Rotschlamms anfallen. Zudem sind die durch die Deponierung entstehenden Langzeitkosten nur schwer kalkulierbar und stellen ein zusätzliches wirtschaftliches Problem dar. Derzeit existieren Deponiebestände mit etwa 1,5 Mrd. Tonnen Rotschlamm. Zu diesen kommen jährlich etwa 50 Mio. Tonnen Rotschlamm dazu.

Die Deponierungskosten können somit erheblich verringert werden, da der bislang als Abfallprodukt betrachtete Rotschlamm mit Hilfe der Erfindung in einen nutzbaren Katalysator umgewandelt und im Rahmen von Crack-Verfahren zur Gewinnung von Wertstoffen verwendet werden kann.

Als Calcium-Salz wird dabei vorzugsweise ein Calciumoxid und/oder ein Calciumhydroxid verwendet, wobei Branntkalk, Weißkalk und/oder Löschkalk besonders bevorzugt sind. Grundsätzlich können im Rahmen des erfindungsgemäßen Verfahrens alle Calcium-Salze verwendet werden, wobei wasserlösliche Calcium-Salze in der Regel bessere Ausbeuten ermöglichen. Als wasserlösliche Calciumsalze kommen beispielsweise in Frage: Calciumacetat, Calciumchlorid, Calciumbromid, Calciumnitrat, Calciumphosphate bzw. deren Hydrate, Calciumchlorid, Calciumsulfat, Calciumlactat, Calciummalat, Calciumcitrat und/oder Calciumnitrat. Als in Wasser nicht- oder schwerlösliche Calciumsalze werden im Rahmen der Erfindung solche Salze verstanden, die bei 20°C zu weniger als 0,1 Gew.-% (1 g/l) in Wasser löslich sind. Solche Calciumsalze sind z.B. Calciumhydroxyphosphat (Ca₅[OH(PO₄)₃]) bzw. Hydroxylapatit, Calciumfluorphosphat (Ca₅[F(PO₄)₃]) bzw. Fluorapatit, fluordotierter Hydroxylapatit der Zusammensetzung Ca₅(PO₄)₃(OH,F) und Calciumfluorid (CaF₂) bzw. Fluorit, Hydroxylapatit, Fluorapatit, Flussspat sowie andere Calciumphosphate wie Di-, Tri- oder Tetracalciumphosphat (Ca₂P₂0₇, Ca₃(P0₄)₂, Ca₄P₂0₉, Oxyapatit (Ca₁₀(PO₄)₆O) oder nichtstöchiometrischer Hydroxylapatit (z.B. Ca_{5 ½}(x+y)(PO₄)_{3_x}(HPO₄) x (OH)). Geeignet sind ebenfalls carbonathaltige Calciumphosphate, Calciumhydrogenphosphat (z. B. Ca(HPO₄)*2 H₂0) und Octacalciumphosphat. Die Verwendung wasserfreier Calciumsalze ist zwar möglich, aber nicht erforderlich, da die Reaktion in wässrigem Medium durchgeführt wird.

Unter einem pH-Wert von mindestens 10 sind dabei insbesondere Werte von 10,0, 10,1, 10,2, 10,3, 10,4, 10,5, 10,6, 10,7, 10,8, 10,9, 11,0, 11,1, 11,2, 11,3, 11,4, 11,5, 11,6, 11,7, 11,8, 11,9, 12,0, 12,1, 12,2, 12,3, 12,4, 12,5, 12,6, 12,7, 12,8, 12,9, 13,0, 13,1, 13,2, 13,3, 13,4, 13,5, 13,6, 13,7, 13,8, 13,9 und/oder 14,0, zu verstehen.

Unter einer Temperatur zwischen 40°C und 49°C sind im Rahmen der Erfindung Temperaturen von 40°C, 41°C, 42°C, 43°C, 44°C, 45°C, 46°C, 47°C, 48°C und/oder 49°C sowie entsprechende Zwischentemperaturen zu verstehen, wobei die Temperatur während Schritt b) grundsätzlich ein- oder mehrmals im angegebenen Temperaturbereich variiert werden kann.

Indem die Suspension während Schritt b) auf eine Temperatur zwischen 40°C und 49°C, insbesondere zwischen 43°C und 48°C, gebracht wird, wird eine quantitative oder zumindest annähernd quantitative Umwandlung des im Rotschlamm vorhandenen Hämatits in Goethit erreicht.

Unter einer Suspension ist im Rahmen der vorliegenden Erfindung ein heterogenes Stoffgemisch aus einer Flüssigkeit und darin fein verteilten Feststoffen zu verstehen. In Abhängigkeit des zugegebenen Calcium-Salzes kann dieses zunächst zerkleinert werden. Rotschlamm selbst liegt üblicherweise bereits in feindisperser Form vor und kann grundsätzlich ohne weitere Verfahrensschritte verwendet werden. In Abhängigkeit der Zusammensetzung des Rotschlamms und des Calcium-Salzes kann in Schritt a) vorgesehen sein, dass der Rotschlamm zunächst homogenisiert und gegebenenfalls durch Zugabe entsprechender Flüssigkeitsmengen in einen pumpfähigen und/oder stichfesten Zustand gebracht wird. Weiterhin kann vorgesehen sein, dass das Calcium-Salz zunächst in einer entsprechenden Flüssigkeitsmenge gelöst und/oder suspendiert wird. Grundsätzlich können der Rotschlamm und/oder das Calcium-Salz zunächst getrennt voneinander erwärmt und anschließend im erwärmten Zustand miteinander gemischt werden. Beispielsweise kann der Rotschlamm zunächst mit Wasser versetzt, auf eine Temperatur zwischen 42°C und 49°C oder auf eine Temperatur von mindestens 50°C, insbesondere auf mindestens 52°C und/oder höchstens 69°C, erwärmt und anschließend mit dem gelösten und/oder aufgeschlämmten Calcium-Salz vermischt werden.

Die Reaktion kann grundsätzlich ohne Zusatz von Huminsäure bzw. HuminsäureDerivaten und damit huminsäurefrei durchgeführt werden, wodurch weitere Kostensparungen entstehen.

Die Erfindung basiert dabei auf der Erkenntnis, dass im Temperaturbereich zwischen 40°C und 49°C eine Tonbildung erfolgt, indem die im Rotschlamm enthaltenen Minerale mit Calcium unter Mineralneubildung zu einem quelltonartigen Calcium-Aluminat-Tonschlamm reagieren. Als Produkte überwiegend Calcium- und Natrium-Aluminate, die aus den im Rotschlamm enthaltenen Aluminiumverbindungen gebildet werden, sowie Goethit, der aus den im Rotschlamm enthaltenen Eisenoxiden und -hydroxiden gebildet wird. Die dabei ablaufenden Hauptreaktionen sind:

3 Ca(OH)₂ + 2 Al₂O₃ + 3 H₂O -> Ca₃AL₂[(OH)₄]₃

sowie die Umwandlung von Hämatit in Goethit:

Fe₂O₃ + H₂O -> 2 FeO(OH).

Die Reaktion geht aufgrund der Umwandlung von Hämatit mit einer Farbänderung von rot nach gelb/braun einher. Dabei kommt es im Unterschied zum Stand der Technik zu einer Freisetzung von elektrostatisch an Fe- und Al-Mineralien gebundener NaOH, die somit praktisch quantitativ abgetrennt werden kann. Der im Rotschlamm vorhandene Alkali-Anteil wird somit nicht zusätzlich gebunden, sondern kann in Form von Natronlauge zusammen mit den Calcium-/Natrium-Aluminaten - beispielsweise durch Abpressen - schnell, einfach und praktisch quantitativ von den übrigen, im Wesentlichen eisenhaltigen Reaktionsprodukten abgetrennt werden. Dabei ist zu betonen, dass nicht nur die gebundene Natronlauge, sondern alle alkalischen Verbindungen mit Hilfe des erfindungsgemäßen Verfahrens aufgrund der chemischen Umwandlung der im Rotschlamm enthaltenen Eisenoxide und Silikate reduziert werden. Durch die Verringerung des Alkalianteils wird auch die weitere Aufarbeitung erleichtert, so dass verschiedene Wertstoffe zugänglich werden. Die Aluminat-Ausbeute kann - wie aus der Reaktionsgleichung ersichtlich - über die zugegebene Calcium-Menge gesteuert werden. Durch Zugabe geringerer Calcium-Mengen kann eine höhere Eisenerz-Ausbeute erzielt werden. Zusätzlich oder alternativ zu Rotschlamm kann die Reaktion auch mit Bauxit oder sonstigen eisenhaltigen Erzen durchgeführt werden.

Bei Temperaturen unterhalb von 40°C entsteht der gewünschte Calcium-Aluminat-Tonschlamm nicht bzw. nicht in wirtschaftlich akzeptablen Geschwindigkeiten und Ausbeuten. Oberhalb von 49°C entstehen demgegenüber abweichende Eisen-, Calcium- und Aluminium-Verbindungen, die nicht über die erforderlichen katalytischen Eigenschaften verfügen und keine umfassende Verwertung von Rotschlamm erlauben. Der Katalysator wird zusammenfassend billig aus einem "Abfallstoff' bei Temperaturen deutlich unter 100°C in wässriger Phase hergestellt. Aufgrund seiner sehr kostengünstigen Herstellung aus einem nahezu unbegrenzt vorhandenen "Abfallstoff' der Aluminiumgewinnung kann das katalytisch wirksame Produktgemisch ohne Weiteres im Durchlauf bzw. als Einwegkatalysator verwendet werden.

In einer vorteilhaften Ausgestaltung der Erfindung ist vorgesehen, dass in Schritt a) ein pH-Wert der Suspension auf mindestens 12 eingestellt wird. Hierdurch wird eine besonders hohe Ausbeute der vorstehend genannten, katalytisch wirksamen Reaktionsprodukte erzielt. Unter einem pH-Wert von mindestens 12 sind dabei insbesondere Werte von 12,0, 12,1, 12,2, 12,3, 12,4, 12,5, 12,6, 12,7, 12,8, 12,9, 13,0, 13,1, 13,2, 13,3, 13,4, 13,5, 13,6, 13,7, 13,8, 13,9 und/oder 14,0, zu verstehen. Dabei haben sich insbesondere pH-Werte zwischen 12,0 und 12,5 als besonders reaktionsfördernd gezeigt.

In einer weiteren vorteilhaften Ausgestaltung der Erfindung ist vorgesehen, dass in Schritt a) ein Gewichtsverhältnis zwischen dem Calcium-Salz und dem Rotschlamm auf einen Wert von mindestens 0,20 und/oder ein Molverhältnis zwischen Calcium und Aluminium auf 1,8 eingestellt wird. Hierdurch werden besonders hohe Umsatzraten und Ausbeuten erzielt.

In einer weiteren vorteilhaften Ausgestaltung der Erfindung ist vorgesehen, dass die Suspension in Schritt b) zwischen 30 Minuten und 2 Stunden und vorzugsweise zwischen 1 Stunde und 2 Stunden erwärmt wird. Auf diese Weise kann eine möglichst vollständige Umsetzung der Edukte sichergestellt werden.

In einer weiteren vorteilhaften Ausgestaltung der Erfindung ist vorgesehen, dass die flüssige Phase in Schritt c) mittels einer Filterpresse und/oder einer Kammerfilterpresse und/oder eines Separators vom festen, den Katalysator umfassenden Produktgemisch abgetrennt wird. Dies stellt eine besonders einfache und kostengünstige Methode zur Gewinnung des Katalysators dar. Das Abtrennen kann dabei grundsätzlich kontinuierlich und/oder diskontinuierlich durchgeführt werden.

In einer weiteren vorteilhaften Ausgestaltung der Erfindung ist vorgesehen, dass das feste, den Katalysator umfassende Produktgemisch nach Schritt c) getrocknet und/oder der Katalysator gereinigt wird. Hierdurch kann der Katalysator an seinen späteren Einsatzzweck angepasst werden.

Ein weiterer Aspekt der Erfindung betrifft ein Verfahren zum Cracken wenigstens einer organischen Kohlenstoffverbindung mittels eines Katalysators, welcher durch ein Verfahren nach einem der vorhergehenden Ausführungsbeispiele hergestellt ist, wobei zumindest die Schritte a) Vermischen des Katalysators mit der wenigstens einen organischen Kohlenstoffverbindung, b) Erwärmen des in Schritt a) erzeugten Gemischs auf eine Temperatur zwischen 250 °C und 450 °C und c) Abtrennen wenigstens eines gasförmigen Reaktionsprodukts von wenigstens einem festen Reaktionsprodukt durchgeführt werden. Auf diese Weise können organische Kohlenstoffverbindungen unter Verwendung des erfindungsgemäßen Katalysators kostengünstiger gecrackt werden. Der Katalysator kann dabei als Wegwerfkatalysator im Rahmen sogenannter "single-pass catalytic conversions" verwendet werden. Die im Zusammenhang mit dem erfindungsgemäßen Verfahren bzw. dem erfindungsgemäßen Katalysator vorgestellten Merkmale und deren Vorteile gelten entsprechend für das erfindungsgemäße Verfahren.

In einer vorteilhaften Ausgestaltung der Erfindung ist vorgesehen, dass in Schritt a) ein Kerogen und/oder Kohle und/oder Teer und/oder ein Öl und/oder Biomasse als organische Kohlenstoffverbindung verwendet wird und/oder dass der Katalysator und die organische Kohlenstoffverbindung in einem Gewichtsverhältnis zwischen 2 und 3, insbesondere von 2,5, miteinander vermischt werden. Hierdurch werden besonders hohe Ausbeuten erzielt. Dabei hat sich eine möglichst homogene Einbettung der organischen Kohlenstoffverbindung in den feindispersen Katalysator als vorteilhaft für eine gleichmäßige und schnelle Umsetzung gezeigt.

In einer weiteren vorteilhaften Ausgestaltung der Erfindung ist vorgesehen, dass das Gemisch in Schritt b) auf eine Temperatur zwischen 280 °C und 400 °C und/oder für eine Zeitdauer zwischen 30 Minuten und 2 Stunden, insbesondere zwischen 40 Minuten und 1 Stunde, erwärmt wird. Mit Hilfe des erfindungsgemäßen Katalysators kann somit eine Biomassevergasung bei besonders niedrigen Temperaturen durchgeführt werden. Demgegenüber müssen aus dem Stand der Technik bekannte Biomassevergasungen bei Temperaturen von mindestens 750°C-800°C durchgeführt werden oder leiden unter einer starken Teerbildung. Ein weiterer wesentlicher Unterschied besteht darin, dass die Biomassevergasung trotz der niedrigen Temperaturen von höchsten 450 °C aufgrund der katalytischen Eigenschaften des Produktgemisches teerfrei und ohne nennenswerte Carbonsäurebildung (insbes. ohne Essigsäure- und Ameisensäurebildung) abläuft. Bei aus dem Stand der Technik bekannten Biomassevergasungs-Verfahren entstehen demgegenüber selbst bei wesentlich höheren Temperaturen üblicherweise große Teermengen, die zu verschiedenen erheblichen Problemen führen.

Bei der Pyrolyse im Niedertemperaturbereich erfolgt eine Reduktion und Oxidneubildung der mineralischen Bestandteile, eine Carbonatbildung bei Mineralien in der CO₂-Atmosphäre (30%) und eine Zersetzung der organischen Holzbestandteile (Zellulose + Hemizellulose) in Gegenwart des heterogenen Katalysators (umfassend: Fe-, K- und Ti-Ionen). Wichtige ablaufende Reaktionen können schematisch mit folgenden beispielhaften Reaktionsgleichungen erläutert werden:
Ca₃AL₂[(OH)₄]₃ bleibt unzersetzt;
2 FeO(OH) -> Fe₂O₃ (Fe₃O₄)+ H₂O (Goethit reagiert zu Maghemit und/oder Magnetit)
NaOH + CO₂ -> Na₂CO₃
SiO₂ + NaOH + CO₂ -> Na-Silikate

Holz- bzw. Biomassevergasung:
C₅₀H₆O₄₃ + n H₂O -> CO (30%) + H₂ (30%) + CHₙ (10%) (exotherm)
("C₅₀H₆O₄₃" entspricht dabei einer durchschnittlichen Holz-Zusammensetzung und dient lediglich der Veranschaulichung)

In einer weiteren vorteilhaften Ausgestaltung der Erfindung ist vorgesehen, dass das Gemisch in Schritt b) unter Sauerstoffabschluss erwärmt wird und/oder beim Erwärmen durch einen Schutzgasvorhang, insbesondere einen CO₂-Vorhang, abgeschirmt wird. Hierdurch wird einerseits eine unerwünschte Oxidation der verschiedenen Edukte und Produkte vermieden, andererseits kann die Carbonatbildung verschiedener mineralischer Bestandteile gezielt gesteuert werden.

In einer weiteren vorteilhaften Ausgestaltung der Erfindung ist vorgesehen, dass die Schritte a) bis c) kontinuierlich, und vorzugsweise in einem Gegenstromvergaser, durchgeführt werden. Hierdurch kann das Verfahren besonders wirtschaftlich durchgeführt werden.

In einer weiteren vorteilhaften Ausgestaltung der Erfindung ist vorgesehen, dass in Schritt c) wenigstens ein gasförmiges Reaktionsprodukt abgetrennt wird, welches CO und/oder H₂ und/oder CH₄ umfasst, und/oder dass ein magnetisches Reaktionsprodukt, welches zumindest Magnetit und/oder Maghemit umfasst, abgetrennt wird und/oder dass ein festes nicht-magnetisches Reaktionsprodukt abgetrennt wird, welches zumindest Kohle und/oder einen Kohlenwasserstoff und/oder wenigstens ein Silikat und/oder wenigstens ein Carbonat und/oder eine Aluminiumverbindung umfasst. Als gasförmiges Reaktionsprodukt kann unter anderem Schwachgas und/oder Generatorgas (mit ca. 40% H₂, 40% CO und 20% CH₄) und/oder Wasserdampf gewonnen werden. Der Wasserdampf kann wiederum zur Energiegewinnung und/oder zum Erwärmen des in Schritt a) erzeugten Gemisches in Schritt b) verwendet werden, so dass das Verfahren autotherm durchgeführt werden kann. Als festes, nicht-magnetisches Reaktionsprodukt kann je nach den vorhergehenden Verfahrensschritten beispielsweise Holzkohle aus der Biomassevergasung gewonnen werden. Als magnetisches Reaktionsprodukt kann insbesondere ein Magnetit/Maghemit umfassendes Eisenerz und als nicht-magnetischen Reaktionsprodukt ein Eisenerz-Kalk-Dünger gewonnen werden.

Es kann vorgesehen sein, dass das CO und/oder H₂ und/oder CH₄ umfassende Reaktionsprodukt zum Durchführen eines Fischer-Tropsch-Verfahrens und/oder eines Gas-to-Liquids-Verfahrens und/oder zum Betreiben eines Heizkraftwerks verwendet wird und/oder dass das magnetische Reaktionsprodukt zur Herstellung von metallischem Eisen und/oder einer Eisenlegierung und/oder als Mineraldünger verwendet wird und/oder dass das feste nicht-magnetische Reaktionsprodukt als Mineralzusatz und/oder als Bodenverbesserer und/oder Klärungsmittel und/oder als Zementzusatz und/oder als Baustoff und/oder als Mineraldünger verwendet wird. Hierdurch ist eine besonders umfassende Wertstoffgewinnung aus dem bislang als Abfall angesehenen Rotschlamm ermöglicht, die ohne die erfindungsgemäße Herstellung des Katalysators nicht möglich war. Das Verfahren kann dabei problemlos für eine Schwach-, Generator-und/oder Synthesegas-Herstellung optimiert werden. Die gasförmigen Produkte können ihrerseits in an sich bekannter Weise zur nachfolgenden Herstellung von Methanol, Fischer-Tropsch- und/oder Gas-to-Liquids-Produkten genutzt werden.

Es kann vorgesehen sein, dass das in Schritt c) abgetrennte feste Reaktionsprodukt als Filterelement, insbesondere zum Filtrieren von Pflanzenöl und/oder von verschmutztem Wasser, verwendet wird. Hierdurch sind verschiedene Treibstoffe bzw. Dieselsubstitute (z.B. Biodiesel, Winter-Biodiesel und dgl.) einfach und kostengünstig zugänglich.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung einer Vorrichtung zum Durchführen eines Verfahrens zum Verwerten von Rotschlamm;
- Fig. 2: ein Ablaufdiagramm eines weiteren Ausführungsbeispiels des erfindungsgemäßen Verfahrens;
- Fig. 3: ein Ablaufdiagramm eines weiteren Ausführungsbeispiels des erfindungsgemäßen Verfahrens; und
- Fig. 4: mehrere Titrationskurven.

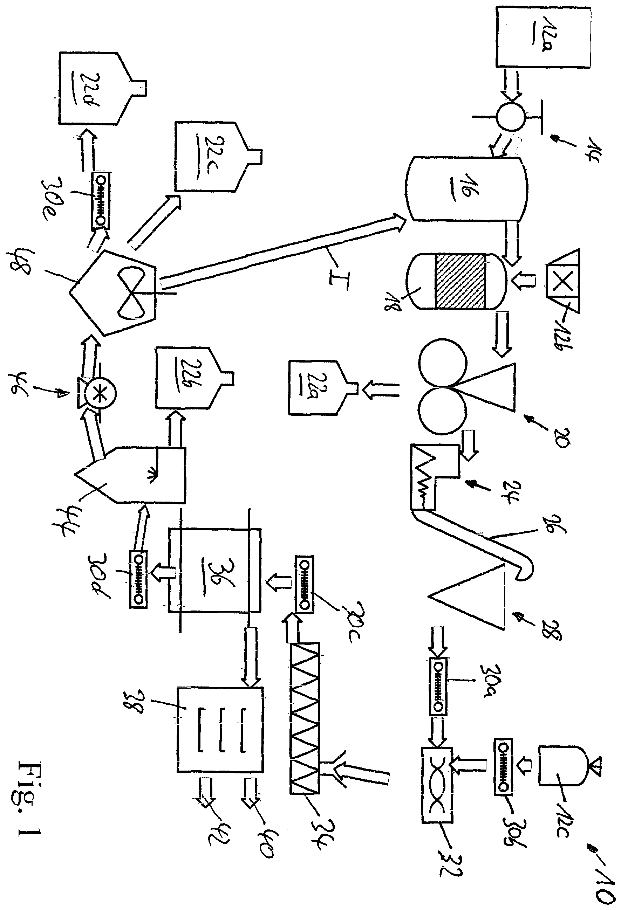

Fig. 1 zeigt eine Prinzipdarstellung einer Vorrichtung 10 zum Durchführen eines Verfahrens zum Herstellen eines Katalysators zum Cracken von organischen Kohlenstoffverbindungen. Die Vorrichtung 10 umfasst einen Vorratsbehälter 12a zum Lagern von Rotschlamm. Vom Vorratsbehälter 12 aus wird der Rotschlamm in stichfester Konsistenz über eine als Schneckenwaage ausgebildete Wiege- und Transporteinrichtung 14 mit einer einstellbaren Durchsatzmenge von 160-250 kg/h in einen Konditionierer 16 gefördert und dort mit Wasser und Natronlauge versetzt, die gemäß Pfeil I aus späteren Verfahrensschritten rückgeführt wird. Dabei wird ein pH-Wert des Rotschlamms auf mindestens 10, insbesondere auf mindestens 12, eingestellt, wobei ein Gewichtsverhältnis zwischen dem Rotschlamm und dem Wasser auf einen Wert zwischen 0,8 und 1,2, insbesondere auf etwa 1,0, eingestellt wird. Aus dem Konditionierer 16 wird der Rotschlamm in einen Reaktor 18 gepumpt und mit Branntkalk versetzt, wodurch eine wässrige Suspension entsteht, die Rotschlamm und Calcium-Salz umfasst. Der Branntkalk wird dabei in einem weiteren Vorratsbehälter 12b gelagert und in derartigen Mengen in den Reaktor 18 gefördert, dass ein Gewichtsverhältnis zwischen dem Calcium-Salz und dem Rotschlamm auf einen Wert von mindestens 0,15, insbesondere von mindestens 0,20, bzw. ein Molverhältnis zwischen Calcium und Aluminium auf einen Wert zwischen 1,6 und 2,0, insbesondere auf 1,8, eingestellt wird.

Die Suspension wird im Reaktor 18 für eine Zeitdauer zwischen 20 Minuten und etwa 4 Stunden auf eine Temperatur zwischen 40°C und 49°C erwärmt. Dabei entsteht in der festen Phase ein eisenreicher Calcium-Aluminat-Tonschlamm (CATO), welcher einen wesentlichen Bestandteil des erfindungsgemäßen Katalysators darstellt. In der flüssigen Phase werden demgegenüber Calcium-/Natrium-Aluminate gebildet. Die Farbe der Suspension wechselt während der Reaktion von rot nach gelb/braun. Weiterhin nimmt die Viskosität zu, da Wasser als Kristallwasser verschiedener Salze eingebunden wird.

Nach Ablauf der Reaktionszeit wird das entstandene Produktgemisch aus dem Reaktor 18 in eine als Kammerfilterpresse ausgebildete Abtrenneinrichtung 20 überführt, in welcher die flüssige Phase zumindest weitgehend von der festen, den Katalysator umfassenden Phase abgetrennt wird. Die flüssige Phase, welche die Calcium-/Natrium-Aluminat-Lauge (Zusammensetzung ca. 96% NaOH, 1,8% Al₂0₃, 1,2% Si0₂) umfasst, wird als Wertstoff in einem Auffangbehälter 22a aufgefangen. Die Abtrenneinrichtung 20 ist dabei ausgelegt, zwischen 200 1/h und 400 1/h an flüssiger Phase abzutrennen.

Der Filterkuchen mit dem festen Produktgemisch wird über einen Grobzerkleinerer 24 und ein Transportband 26 in einen Feinzerkleinerer 28 transportiert und in Partikel mit Durchmessern von etwa 2,0 bis 2,5 mm zerkleinert. Über eine als Zellradschleuse ausgebildete Transporteinrichtung 30a wird das Tonmineralgemisch mit einer Temperatur von weniger als 65°C und einer Durchsatzrate zwischen 200 1/h und 400 1/h in eine als Doppelwellenmischer ausgebildete Mischeinrichtung 32 transportiert und mit Hackschnitzeln vermischt. Die Hackschnitzel, welche Biomasse mit verschiedensten organischen Kohlenstoffverbindungen darstellen, werden in einem weiteren Vorratsbehälter 12c gelagert und ebenfalls mit einer als Zellradschleuse ausgebildeten Transporteinrichtung 30b mit einer Temperatur von weniger als 65°C und einer Durchsatzrate zwischen 200 kg/h und 400 kg/h in die Mischeinrichtung 32 transportiert.

Über eine als Förderschnecke ausgebildete Transporteinrichtung 34 und eine weitere als Zellradschleuse ausgebildete Transporteinrichtung 30c werden das katalytisch wirksame Produktgemisch (CATO) und die Hackschnitzel mit einer Temperatur von etwa 105°C in einen vorzugsweise durchlauffähigen Biomassevergaser 36 gefüllt und, vorzugsweise unter Sauerstoffabschluss auf eine Temperatur zwischen 250°C und 450°C, insbesondere zwischen 280°C und 400°C, erwärmt. Der Sauerstoffabschluss kann beispielsweise mittels eines mittels eines CO₂-Schutzgasvorhangs erzielt werden. Die Biomassevergasung kann grundsätzlich kontinuierlich und/oder diskontinuierlich durchgeführt werden. Bei der Biomassevergasung laufen verschiedene Reduktionen, Oxidneubildungen und Zersetzungen der organischen Holzbestandteile (Zellulose, Hemizellulose etc.) in Gegenwart des heterogenen Katalysators (katalytisch insbesondere wirksam: Fe-, K- und Ti-Ionen) ab. Aufgrund des CO₂-Gehalts der Reaktionsatmosphäre kommt es zudem zu einer Carbonatbildung.

Als gasförmige Reaktionsprodukte entstehen Generatorgas (mit einer Zusammensetzung von etwa 40% H₂, 40% CO und 40% CH₄), CO₂ und Wasserdampf. Die Ausbeute der gasförmigen Produkte liegt dabei regelmäßig bei etwa 70% der eingesetzten Hackschnitzel-Trockensubstanz. Das Generatorgas wird abgetrennt und einem Blockheizkraftwerk 38 zugeführt, mittels welchem elektrischer Strom 40 und Prozesswärme 42 gewonnen wird. Dies erlaubt es, das gesamte Verfahren autotherm bzw. die gesamte Vorrichtung 10 autark zu betreiben.

Die festen Reaktionsprodukte der Biomassevergasung umfassen im Wesentlichen Holzkohle, Eisenminerale, Silikate, Titandioxid und Kalkminerale. Die Holzkohleausbeute liegt regelmäßig bei etwa 30%-40% der eingesetzten Hackschnitzel-Trockensubstanz. Es ist dabei zu betonen, dass die Biomassevergasung aufgrund der katalytischen und reaktionsfördernden Eigenschaften des CATO sowohl bei diesen niedrigen Temperaturen als auch praktisch teerfrei abläuft. Die festen Reaktionsprodukte werden mit einer Temperatur unterhalb von 320°C und einer Rate zwischen 200 kg/h und 400 kg/h über eine weitere als Zellradschleuse ausgebildete Transporteinrichtung 30d in einen mit Wasser befüllten bzw. befüllbaren Abschreckbehälter 44 transportiert. Über eine Dichtetrennung kann die leichte Holzkohle abgetrennt und in einem Auffangbehälter 22b gesammelt werden. Die schwereren Mineralstoffe werden über eine als Schneckenpumpe ausgebildete Transporteinrichtung 46 in einen Sedimenter 48 gefördert, in welchem einem Abtrennung und Rückführung von Natronlauge (Pfeil I) sowie eine Dichtetrennung der Mineralstoffe in eine leichtere Fraktion mit einer Dichte von etwa 3 g/cm³ und eine schwerere Fraktion mit einer Dichte von etwa 5 g/cm³ stattfindet. Die leichtere Fraktion wird in einen weiteren Auffangbehälter 22c transportiert und umfasst ein als Eisenkalk-Mineraldünger verwendbares Mineralgemisch, das im Wesentlichen aus Silikaten, Titandioxid und Kalkmineralen besteht. Dieses Mineralgemisch kann gegebenenfalls mit Holzkohlepulver zu Terra Preta weiterverarbeitet werden, wobei das Holzkohlepulver natürlich aus der Biomassevergasung gewonnen werden kann. Die schwerere Fraktion wird über eine weitere als Zellradschleuse ausgebildete Transporteinrichtung 30e in einen weiteren Auffangbehälter 22d transportiert und umfasst im Wesentlichen Eisenerz.

Somit stellen alle Endprodukte des Verfahrens Wertstoffe dar, die umweltneutral aus dem bislang als Abfallstoff angesehenen Rotschlamm erhältlich sind.

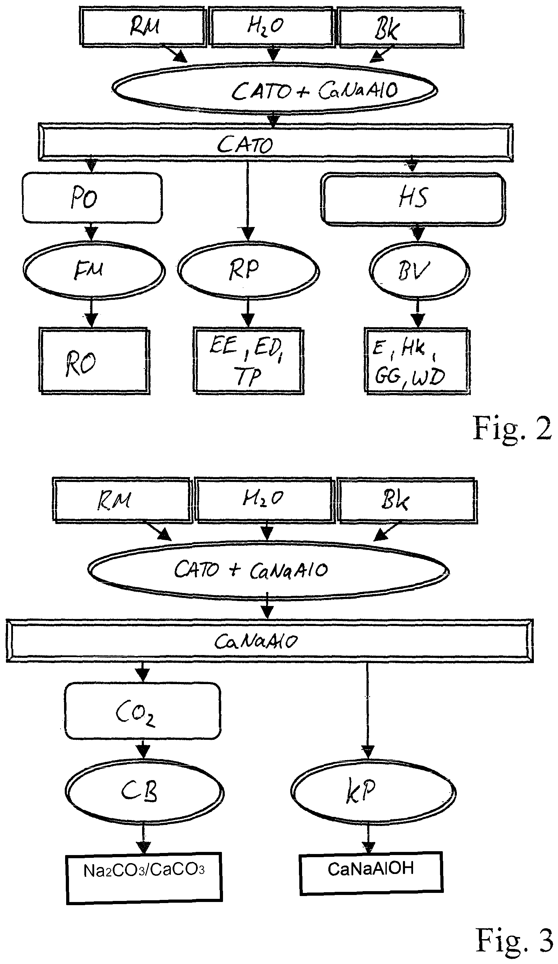

Fig. 2 zeigt ein Ablaufdiagramm eines weiteren Ausführungsbeispiels des erfindungsgemäßen Verfahrens. Zunächst wird dabei eine wässrige Suspension aus Rotschlamm (RM), Wasser (H₂O) und Branntkalk (BK) als Calcium-Salz hergestellt und auf eine Temperatur zwischen 42°C und 49°C erwärmt. Hierbei wird das vorstehend erläuterte Produktgemisch aus festem, eisenreichen Calcium-Aluminat-Tonschlamm (CATO) und flüssiger Ca-/Na-Aluminatlauge (CaNaAlO) gebildet. Der CATO wird anschließend von der wässrigen Phase abgetrennt.

In einem ersten Verfahrenszweig wird der gewonnene CATO mit einem Pflanzenöl (PO) - z.B. Sojaöl, Jatrophaöl und dergleichen - versetzt und als Filtermasse (FM) verwendet. Hierdurch können raffinierte Öle (RO) - auch Bioöle - sowie Treibstoff- und Dieselsubstitute als Wertstoffe erhalten werden.

In einem zweiten Verfahrenszweig wird der CATO einem Reduktionsprozess (RP) unterworfen, wodurch Eisenerz (EE), Eisenkalk-Dünger (ED) und - nach Vermischen des Eisenkalk-Düngers mit Holzkohlestaub - Terra Preta (TP) zugänglich sind.

In einem dritten Verfahrenszweig wird der CATO - wie vorstehend beschrieben - mit Hackschnitzeln (HS) vermischt und zur Biomassevergasung (BV) verwendet. Hierdurch ist Energie (E) in Form von elektrischem Strom und/oder Prozesswärme, teerfreie Holzkohle (HK), Generatorgas (GG) und Wasserdampf (WD) erhältlich. Alternativ oder zusätzlich kann das Generatorgas mit den entsprechenden Vorteilen zum Durchführen eines Fischer-Tropsch-Verfahrens und/oder eines Gas-to-Liquids-Verfahrens verwendet werden.

Fig. 3 zeigt ein Ablaufdiagramm eines weiteren Ausführungsbeispiels des erfindungsgemäßen Verfahrens. Zunächst wird analog dem vorhergehenden Ausführungsbeispiel eine wässrige Suspension aus Rotschlamm (RM), Wasser (H₂O) und Branntkalk (BK) als Calcium-Salz hergestellt und auf eine Temperatur zwischen 42°C und 78°C erwärmt. Hierbei wird das vorstehend erläuterte Produktgemisch aus festem, eisenreichen Calcium-Aluminat-Tonschlamm (CATO) und flüssiger Ca-/Na-Aluminatlauge (CaNaAlO) gebildet. Im vorliegenden Ausführungsbeispiel wird die Ca-/Na-Aluminatlauge anschließend von der festen Phase, d.h. vom CATO, abgetrennt.

In einem ersten Verfahrenszwei wird die Ca-/Na-Aluminatlauge mit CO₂ versetzt, wodurch eine Carbonatbildung (CB) initiiert wird. Hierdurch werden Soda (Na₂CO₃) und Kalk (Ca-CO₃) als Wertstoffe erhalten. Das CO₂ kann dabei beispielsweise aus der vorstehend beschriebenen Biomassevergasung stammen, wodurch das Verfahren besonders wirtschaftlich und umweltneutral durchgeführt werden kann.

In einem zweiten Verfahrenszweig wird die Ca-/Na-Aluminatlauge aufkonzentriert (KP), wodurch eine konzentrierte Ca-/Na-Aluminatlauge (CaNaAlOH) mit anwendungsspezischen Eigenschaften erhältlich ist. Die Ca-/Na-Aluminatlauge kann beispielsweise wieder im Rahmen des Bayer-Verfahrens eingesetzt werden, wodurch die ansonsten anfallenden Kosten für die Herstellung dieser Lauge entfallen.

In einem weiteren Ausführungsbeispiel werden mit Hilfe einer auf eine Durchsatzmenge von 100000 t/a Rotschlamm ausgelegten Vorrichtung 10 aus:
- 100000 t/a Rotschlamm;
- 20000 t/a Branntkalk;
- 40000 t/a Hackschnitzel (35% Wasseranteil); und
- 50000 t/a Wasser
in der vorstehend beschriebenen Weise
- 56400 t/a Eisenerze;
- 58800 t/a Eisenkalk-Mineraldünger;
- 38100 t/a Ca-/Na-Aluminatlauge
- 7280 t/a Holzkohle;
- 13104 t/a Generatorgas;
- 5616 t/a CO₂; und
- 30700 t/a Wasserdampf
gewonnen.

In einem weiteren Ausführungsbeispiel werden aus:
- 330 t CATO; und
- 1000 t Pflanzenöl
in der vorstehend beschriebenen Weise
- 900-930 t raffiniertes Öl; und
- 430-400 t mit organischen Restverbindungen versetzter CATO
gewonnen. Das Pflanzenöl stammt beispielsweise aus der Pressung von Ölpflanzen. Das Mischungsverhältnis von CATO zu rohem Pflanzenöl beträgt üblicherweise etwa 1:3. Der mit Resten organischer Pflanzenölanteilen versetzte CATO kann anschließend analog der Verarbeitung von Holzschnitzeln in der vorstehend beschriebenen Weise zu den entsprechenden Rohstoffen/Mineralien umgesetzt werden. Der organischen Pflanzenölanteile können in Generatorgas umgewandelt und anschließend zur Gewinnung von elektrischem Strom (20%) und Prozesswärme (80%) verwendet werden.

Zusammenfassend liefert Rotschlamm als Ausgangsstoff mit Hilfe des erfindungsgemäßen Verfahrens bzw. mit Hilfe der Vorrichtung 10 unter anderem:
- einen billigen Katalystor zum Cracken von organischen Kohlenstoffverbindungen;
- Eisenerze, Eisen-Titanerze und "Fine ore" für die Eisenverhüttung;
- Holzkohle und Generatorgas, die beispielsweise in Blockheizkraftwerken zur Gewinnung von elektrischem Strom und Prozesswärme genutzt werden können;
- Eisenkalk-Mineral-Dünger und Terra Preta als Bodenverbesserer zur Neutralisierung saurer Böden sowie zur Agrarlandgewinnung;
- Natronlauge und Aluminatlauge, die als Desinfektions- oder Reinigungsmittel, als Klärhilfsstoff oder zur Abwasserreinigung in der Chemischen Industrie, in Brauereien, in der Aluminium-Industrie und dergleichen verwendbar sind;
- Tonmineralien und Silikate, die als Ziegelbaustoff, Zuschlagstoff für den Straußenbau, zur Kunststoff-Faser-Herstellung, als Dichtungsmassen und dergleichen in der Baustoffindustrie verwendbar sind; und
- Generierung von CO₂-Zertifikaten, indem CO₂ in Form von Soda und/oder Kalk gebunden wird.

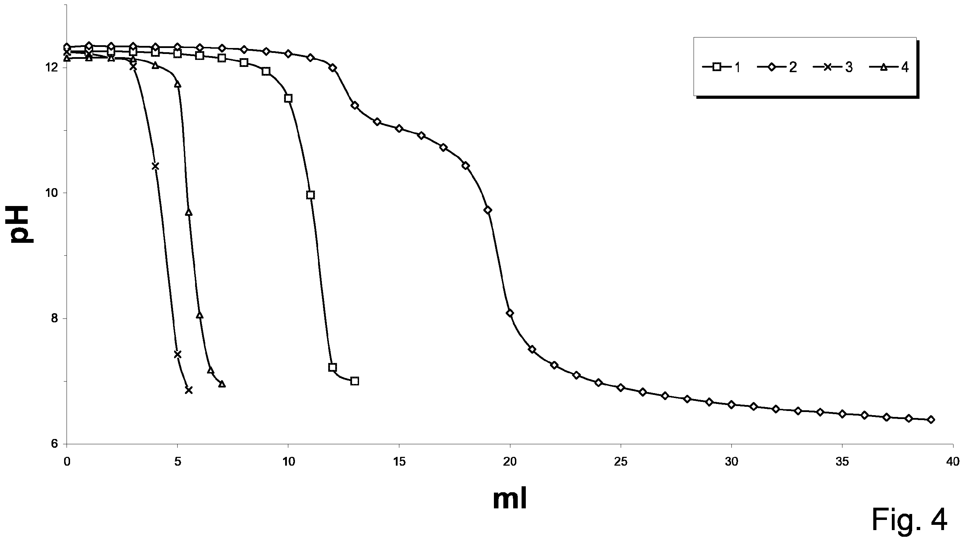

Fig. 4 zeigt graphische Darstellungen mehrerer Titrationskurven, bei welchen der pH-Wert von vier im Folgenden näher erläuterten Proben "1" bis "4" gegen das zugegebene Volumen Essigsäure (Eisessig, CH₃COOH) aufgetragen ist.

Für die erste Probe "1" wurde der in den vorhergehenden Beispielen beschriebene CATO, welcher aus der Reaktion eines Gemisches von Rotschlamm mit 15 Gew.-% CaO erhalten wurde, mit Hilfe einer Kammerfilterpresse abgepresst. Darüber hinaus wurden drei weitere Proben aus Rotschlamm hergestellt, wobei die Probe "2" nur aus Rotschlamm bestand und die weiteren Proben neben Rotschlamm 10 Gew.-% (Probe "3") bzw. 15 Gew.-% (Probe "4") an zugesetztem Branntkalk (CaO) umfassten. Anschließend wurden bei den drei Proben "2" bis "4" durch Zugabe von Wasser ein Verhältnis Trockenmasse:Flüssigkeit von 1:2 sowie ein pH-Wert von 12,4 eingestellt.

Die drei Proben "2" bis "4" wurden unter Rühren für 2 Stunden auf eine Temperatur von etwa 48°C erwärmt, wobei bei den beiden mit Branntkalk versetzten Proben "3" und "4" ein Farbumschlag von rot nach gelb/braun beobachtet wurde. Nach dem Abkühlen und Absetzen der festen Phase war zudem erkennbar, dass mit steigendem Branntkalkanteil die Flüssigkeitsbindung stark zunahm, so dass die Flüssigkeit bei der ursprünglich 10 Gew.-% Branntkalk enthaltenden Probe "3" weitgehend und bei der ursprünglich 15 Gew.-% Branntkalk enthaltenden Probe "4" praktisch vollständig in den entstandenen Tonschlamm eingebunden war.

Die flüssigen Phasen der Proben "2" bis "4 wurden ebenfalls abfiltriert und zusammen mit dem Filtrat von Probe "1" gegen Essigsäure titriert. Die Titrationskurve der als Probe "1" bezeichneten Presslauge ist in Fig. 4 mit Quadraten, die Titrationskurve der als Fasslauge bezeichneten Probe "2" mit Rauten, die Titrationskurve des Filtrats von Probe "3" mit Kreuzen und die Titrationskurve des Filtrats von Probe "4" mit Dreiecken gekennzeichnet.

Wie aus Fig. 4 deutlich wird, entspricht der Verlauf der Titrationskurve von Probe "1" im Wesentlichen dem Verlauf von reiner Natronlauge. Analog zur Probe "1" korrespondieren auch die Titrationskurven der Proben "3" und "4" aufgrund der Tonbildungsreaktionen mit der Titrationskurve von reiner Natronlauge. Demgegenüber zeigt die aus "reinem" Rotschlamm gewonnene Fasslauge "2" eine wesentlich höhere Pufferkapazität sowie einen zusätzlichen Äquivalenzpunkt, welcher auf die Pufferwirkung von Ionentauscher-artigen Verbindungen im Rotschlamm (z. B. Ca-Na-Silikate (Zeolithe), Sodalith, Cancrinit, Na-Al-Silikate und dgl.) zurückzuführen ist.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

## Patentansprüche

1. Verfahren zum Herstellen eines Katalysators zum Cracken von organischen Kohlenstoffverbindungen, bei welchem zumindest folgende Schritte durchgeführt werden:
a) Herstellen einer wässrigen Suspension, welche Rotschlamm und zumindest ein Calcium-Salz umfasst, wobei ein pH-Wert der Suspension auf mindestens 10, ein Gewichtsverhältnis zwischen dem Rotschlamm und Wasser auf einen Wert zwischen 0,8 und 1,2, ein Gewichtsverhältnis zwischen dem Calcium-Salz und dem Rotschlamm auf einen Wert von mindestens 0,15 und ein Molverhältnis zwischen Calcium und Aluminium auf einen Wert zwischen 1,6 und 2,0 eingestellt wird;
b) Erwärmen der Suspension zwischen 10 Minuten und 6 Stunden auf eine Temperatur zwischen 40 °C und 49 °C; und
c) Abtrennen wenigstens eines überwiegenden Teils einer wässrigen Phase von einem festen, in Schritt b) erzeugten Produktgemisch, wobei das feste Produktgemisch den Katalysator umfasst.

2. Verfahren nach Anspruch 1,
**dadurch gekennzeichnet, dass**
in Schritt a) ein pH-Wert der Suspension auf mindestens 12 eingestellt wird.

3. Verfahren nach Anspruch 1 oder 2,
**dadurch gekennzeichnet, dass**
in Schritt a) ein Gewichtsverhältnis zwischen dem Calcium-Salz und dem Rotschlamm auf einen Wert von mindestens 0,20 und/oder ein Molverhältnis zwischen Calcium und Aluminium auf 1,8 eingestellt wird.

4. Verfahren nach einem der Ansprüche 1 bis 3,
**dadurch gekennzeichnet, dass**
die Suspension in Schritt b) zwischen 30 Minuten und 2 Stunden und vorzugsweise zwischen 1 Stunde und 2 Stunden erwärmt wird.

5. Verfahren nach einem der Ansprüche 1 bis 4,
**dadurch gekennzeichnet, dass**
die flüssige Phase in Schritt c) mittels einer Filterpresse und/oder einer Kammerfilterpresse und/oder eines Separators vom festen, den Katalysator umfassenden Produktgemisch abgetrennt wird.

6. Verfahren nach einem der Ansprüche 1 bis 5,
**dadurch gekennzeichnet, dass**
das feste, den Katalysator umfassende Produktgemisch nach Schritt c) getrocknet und/oder der Katalysator gereinigt wird.

7. Verfahren zum Cracken wenigstens einer organischen Kohlenstoffverbindung mittels eines Katalysators, welcher durch ein Verfahren nach einem der Ansprüche 1 bis 6 hergestellt ist, wobei zumindest folgende Schritte durchgeführt werden:
a) Vermischen des Katalysators mit der wenigstens einen organischen Kohlenstoffverbindung;
b) Erwärmen des in Schritt a) erzeugten Gemischs auf eine Temperatur zwischen 250 °C und 450 °C; und
c) Abtrennen wenigstens eines gasförmigen Reaktionsprodukts von wenigstens einem festen Reaktionsprodukt.

8. Verfahren nach Anspruch 7,
**dadurch gekennzeichnet, dass**
in Schritt a) ein Kerogen und/oder Kohle und/oder Teer und/oder ein Öl und/oder Biomasse als organische Kohlenstoffverbindung verwendet wird und/oder dass der Katalysator und die organische Kohlenstoffverbindung in einem Gewichtsverhältnis zwischen 2 und 3, insbesondere von 2,5, miteinander vermischt werden.

9. Verfahren nach Anspruch 7 oder 8,
**dadurch gekennzeichnet, dass**
das Gemisch in Schritt b) auf eine Temperatur zwischen 280 °C und 400 °C und/oder für eine Zeitdauer zwischen 30 Minuten und 2 Stunden, insbesondere zwischen 40 Minuten und 1 Stunde, erwärmt wird.

10. Verfahren nach einem der Ansprüche 7 bis 9,
**dadurch gekennzeichnet, dass**
das Gemisch in Schritt b) unter Sauerstoffabschluss erwärmt wird und/oder beim Erwärmen durch einen Schutzgasvorhang, insbesondere einen CO₂-Vorhang, abgeschirmt wird.

11. Verfahren nach einem der Ansprüche 7 bis 10,
**dadurch gekennzeichnet, dass**
die Schritte a) bis c) kontinuierlich, und vorzugsweise in einem Gegenstromvergaser, durchgeführt werden.

12. Verfahren nach einem der Ansprüche 7 bis 11,
**dadurch gekennzeichnet, dass**
in Schritt c) wenigstens ein gasförmiges Reaktionsprodukt abgetrennt wird, welches CO und/oder H₂ und/oder CH₄ umfasst, und/oder dass ein magnetisches Reaktionsprodukt, welches zumindest Magnetit und/oder Maghemit umfasst, abgetrennt wird und/oder dass ein festes nicht-magnetisches Reaktionsprodukt abgetrennt wird, welches zumindest Kohle und/oder einen Kohlenwasserstoff und/oder wenigstens ein Silikat und/oder wenigstens ein Carbonat und/oder eine Aluminiumverbindung umfasst.

## Claims

1. Method for producing a catalyst for cracking organic carbon compounds, in which at least the following steps are performed:
a) producing an aqueous suspension including red mud and at least one calcium salt, wherein a pH value of the suspension is adjusted to at least 10, a weight ratio between the red mud and water is adjusted to a value between 0.8 and 1.2, a weight ratio between the calcium salt and the red mud is adjusted to a value of at least 0.15 and a molar ratio between calcium and aluminum is adjusted to a value between 1.6 and 2.0;
b) heating the suspension between 10 minutes and 6 hours to a temperature between 40 °C and 49 °C; and
c) separating at least a predominant part of an aqueous phase from a solid product mixture produced in step b), wherein the solid product mixture includes the catalyst.

2. Method according to claim 1,
**characterized in that**
a pH value of the suspension is adjusted to at least 12 in step a).

3. Method according to claim 1 or 2,
**characterized in that**
a weight ratio between the calcium salt and the red mud is adjusted to a value of at least 0.20 and/or a molar ratio between calcium and aluminum is adjusted to 1.8 in step a).

4. Method according to any one of claims 1 to 3,
**characterized in that**
the suspension is heated between 30 minutes and 2 hours and preferably between 1 hour and 2 hours in step b).

5. Method according to any one of claims 1 to 4,
**characterized in that**
the liquid phase is separated from the solid product mixture including the catalyst by means of a filter press and/or a chamber filter press and/or a separator in step c).

6. Method according to any one of claims 1 to 5,
**characterized in that**
the solid product mixture including the catalyst is dried after step c) and/or the catalyst is purified.

7. Method for cracking at least one organic carbon compound by means of a catalyst, which is produced by a method according to any one of claims 1 to 6, wherein at least the following steps are performed:
a) mixing the catalyst with the at least one organic carbon compound;
b) heating the mixture produced in step a) to a temperature between 250 °C and 450 °C; and
c) separating at least one gaseous reaction product from at least one solid reaction product.

8. Method according to claim 7,
**characterized in that**
in step a), a kerogen and/or coal and/or tar and/or an oil and/or biomass is used as the organic carbon compound and/or that the catalyst and the organic carbon compound are mixed with each other in a weight ratio between 2 and 3, in particular of 2.5.

9. Method according to claim 7 or 8,
**characterized in that**
the mixture is heated to a temperature between 280 °C and 400 °C and/or for a period of time between 30 minutes and 2 hours, in particular between 40 minutes and 1 hour, in step b).

10. Method according to any one of claims 7 to 9,
**characterized in that**
the mixture is heated with oxygen exclusion and/or is shielded by a protective gas curtain, in particular a CO₂ curtain, in heating in step b).

11. Method according to any one of claims 7 to 10,
**characterized in that**
the steps a) to c) are performed continuously and preferably in a counter-flow gasifier.

12. Method according to any one of claims 7 to 11,
**characterized in that**
in step c), at least one gaseous reaction product is separated, which includes CO and/or H₂ and/or CH₄, and/or that a magnetic reaction product including at least magnetite and/or maghemite, is separated and/or that a solid nonmagnetic reaction product is separated, which includes at least coal and/or a hydrocarbon and/or at least one silicate and/or at least one carbonate and/or an aluminum compound.

## Revendications

1. Procédé de fabrication d'un catalyseur, destiné au craquage de composés carbonés organiques, pour lequel au moins les étapes suivantes seront exécutées :
a) fabrication d'une suspension aqueuse, laquelle comprend de la boue rouge et au moins un sel de calcium, une valeur pH de la suspension étant paramétrée à au moins 10, un rapport en poids entre la boue rouge et l'eau sur une valeur entre 0,8 et 12, un rapport en poids entre le sel de calcium et la boue rouge sur une valeur d'au moins 0,15 et un rapport molaire entre le calcium et l'aluminium sur une valeur entre 1,6 et 2,0 ;
b) chauffage de la suspension entre 10 minutes et 6 heures à une température entre 40° C et 49° C et
c) séparation au moins d'une partie essentielle d'une phase aqueuse d'un mélange solide de produits, générés au cours de l'étape b), le mélange solide de produits comprenant le catalyseur.

2. Procédé selon la revendication 1,
**caractérisé en ce que**,
au cours de l'étape a), une valeur pH de la suspension est paramétrée sur au moins 12.

3. Procédé selon la revendication 1 ou 2,
**caractérisé en ce que**,
au cours de l'étape a), un rapport en poids entre le sel de calcium et la boue rouge est paramétré sur une valeur d'au moins 0,20 et / ou un rapport molaire entre le calcium et l'aluminium sur 1,8.

4. Procédé selon l'une des revendications 1 à 3,
**caractérisé en ce que**
la suspension au cours de l'étape b) est chauffée entre 30 minutes et 2 heures et de préférence entre 1 heure et 2 heures.

5. Procédé selon l'une des revendications 1 à 4,
**caractérisé en ce que**
la phase liquide au cours de l'étape c) est séparée au moyen d'un filtre-presse et / ou d'un filtre-presse à chambres et / ou d'un séparateur, du mélange solide de produits, comprenant le catalyseur.

6. Procédé selon l'une des revendications 1 à 5,
**caractérisé en ce que**
le mélange solide de produits, comprenant le catalyseur, est séché après l'étape c) et / ou que le catalyseur est purifié.

7. Procédé de craquage au moins d'un composé carboné organique au moyen d'un catalyseur, lequel est fabriqué par le biais d'un procédé selon l'une des revendications 1 à 6, au moins les étapes suivantes étant exécutées :
a) mélange du catalyseur avec le au moins un composé carboné organique ;
b) chauffage du mélange, généré au cours de l'étape a), à une température entre 250° C et 450° C et
c) séparation au moins d'un produit de réaction gazeux d'au moins un produit de réaction solide.

8. Procédé selon la revendication 7,
**caractérisé en ce que**,
au cours de l'étape a), un kérogène et / ou du carbone et / ou du goudron et / ou un hydrocarbure et / ou de la biomasse est utilisé(e) comme composé carboné organique et / ou que le catalyseur et le composé carboné organique sont mélangés ensemble dans un rapport en poids entre 2 et 3, en particulier de 2,5.

9. Procédé selon la revendication 7 ou 8,
**caractérisé en ce que**
le mélange est chauffé, au cours de l'étape b), à une température entre 280° C et 400° C et / ou pour une durée entre 30 minutes et 2 heures, en particulier entre 40 minutes et 1 heure.

10. Procédé selon l'une des revendications 7 à 9,
**caractérisé en ce que**
le mélange est chauffé, au cours de l'étape b), sans oxygène et / ou qu'il est protégé en cas de chauffage par le biais d'un rideau de gaz de protection, en particulier d'un rideau de CO₂.

11. Procédé selon l'une des revendications 7 à 10,
**caractérisé en ce que**
les étapes a) à c) sont exécutées en continu et de préférence dans un gazéificateur à contre-courant.

12. Procédé selon l'une des revendications 7 à 11,
**caractérisé en ce que**,
au cours de l'étape c), au moins un produit de réaction gazeux est séparé, lequel comprend du CO et / ou du H₂ et /ou du CH₄ et / ou qu'un produit de réaction magnétique, lequel comprend au moins de la magnétite et / ou de la maghémite, est séparé et / ou qu'un produit de réaction solide, non magnétique, est séparé, lequel comprend au moins du carbone et / ou un hydrocarbure et / ou au moins un silicate et / ou au moins un carbonate et / ou un composé d'aluminium.
